# EUROPEAN PATENT APPLICATION

(11) **EP 4 734 276 A1**
(43) Date of publication of application: **29.04.2026**
(21) Application number: 23944702.2
(22) Date of filing: 12.07.2023
(51) Int. Cl.: H01M 50/593, H01M 50/147

(54) **LOWER PLASTIC PART, END COVER ASSEMBLY, ENERGY STORAGE APPARATUS, AND ELECTRICAL DEVICE**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LI, Maosong, Xiamen, Fujian 361100 (CN); TAN, Jiben, Xiamen, Fujian 361100 (CN)
(74) Representative: Santarelli
(86) International application number: PCT/CN2023/107085
(87) International publication number: WO 2025/010682

(57) **Abstract**

A lower plastic member, an end-cover assembly, an energy storage apparatus, and an electricity-consumption device are provided. The lower plastic member includes a lower-plastic-member body. The lower-plastic-member body has a first surface and a second surface. The first surface and the second surface are positioned facing away from each other in a thickness direction of the lower plastic member. The lower-plastic-member body is provided with a protruding block, a first protrusion, and a second protrusion. The protruding block, the first protrusion, and the second protrusion all protrude from the second surface. The first protrusion and the second protrusion are respectively positioned at opposite ends of the lower-plastic-member body in a length direction of the lower plastic member. Both the first protrusion and the second protrusion extend in a width direction of the lower plastic member. The protruding block is positioned between the first protrusion and the second protrusion and is spaced apart from each of the first protrusion and the second protrusion. The protruding block extends in the width direction of the lower plastic member. The protruding block has a first side-surface. The first protrusion has a third side-surface. The second protrusion has a fifth side-surface. The first side-surface, the third side-surface, and the fifth side-surface are positioned at a same side of the lower plastic member in the width direction of the lower plastic member. An injection-molded portion is provided on each of the first side-surface, the third side-surface, and the fifth side-surface. The lower plastic member has a relatively fast injection molding rate and a relatively high production yield.

## Description

### TECHNICAL FIELD

This disclosure relates to the field of energy storage technology, and in particular, to a lower plastic member, an end-cover assembly, an energy storage apparatus, and an electricity-consumption device.

### BACKGROUND

A rechargeable battery, also known as a secondary battery or storage battery, refers to a battery that can be recharged to reactivate an active material after discharge, allowing continued use. The recyclable nature of rechargeable batteries has gradually made them the primary power source for electricity-consumption devices. As the demand for rechargeable batteries increases, the performance requirements for these batteries have also risen, particularly regarding the energy density per unit volume. The thickness of the end-cover assembly of the battery is a crucial parameter affecting the energy density per unit volume of the battery. If the end-cover assembly is too thick, the energy density per unit volume of the battery may be reduced. At present, the end-cover assembly includes a lower plastic member for insulation between the top cover and the terminal post, and the lower plastic member is typically designed to be very thin to increase the energy density per unit volume of the battery. An existing lower plastic member has a relatively large molding shrinkage rate due to the material itself (e.g., polyethylene, with a molding shrinkage rate between 1.5% and 3.6%). An existing molding process does not design a flow channel for a special structure of the thin-sheet lower plastic member. As a result, during the molding process of the lower plastic member, the lower plastic member is prone to warping or fracture due to non-uniform filling and increased internal stress, so that the production yield of the lower plastic member cannot be further improved, which has become one of factors constraining the reduction of the production cost of rechargeable batteries.

### SUMMARY

The present disclosure provides a lower plastic member, an end-cover assembly, an energy storage apparatus, and an electricity-consumption device, so that the structural strength of the lower plastic member can be ensured, and the production yield of the lower plastic member can be improved.

In a first aspect, the present disclosure provides a lower plastic member for an energy storage apparatus. The lower plastic member includes a lower-plastic-member body. The lower-plastic-member body has a first surface and a second surface. The first surface and the second surface are positioned facing away from each other in a thickness direction of the lower plastic member. The lower-plastic-member body is provided with a protruding block, a first protrusion, and a second protrusion. The protruding block, the first protrusion, and the second protrusion all protrude from the second surface. The first protrusion and the second protrusion are respectively positioned at opposite ends of the lower-plastic-member body in a length direction of the lower plastic member. Both the first protrusion and the second protrusion extend in a width direction of the lower plastic member. The protruding block is positioned between the first protrusion and the second protrusion and is spaced apart from each of the first protrusion and the second protrusion. The protruding block extends in the width direction of the lower plastic member. The protruding block has a first side-surface. The first protrusion has a third side-surface. The second protrusion has a fifth side-surface. The first side-surface, the third side-surface, and the fifth side-surface are positioned at a same side of the lower plastic member in the width direction of the lower plastic member. Each of the first side-surface, the third side-surface, and an injection-molded portion is provided on the fifth side-surface.

In a possible implementation, the lower plastic member defines a through groove. The through groove has a groove sidewall protruding from the second surface. The lower plastic member is further provided with an explosion-proof grid. The explosion-proof grid is disposed in the through groove and is connected to one end of the groove sidewall positioned facing away from the first surface. The explosion-proof grid includes several first ribs and several second ribs. The several first ribs extend in the width direction of the lower plastic member and are connected to the groove sidewall of the through groove. The several second ribs extend in the length direction of the lower plastic member and are connected to the groove sidewall of the through groove. The several first ribs and the several second ribs are connected in a crisscross pattern.

In a possible implementation, multiple first ejector-pin portions are provided on the first surface. The multiple first ejector-pin portions are symmetrical about a central axis. The central axis is a straight line extending in the length direction of the lower plastic member and positioned in a middle of the lower plastic member in the width direction of the lower plastic member.

In a possible implementation, in the width direction of the lower plastic member, the multiple first ejector-pin portions are positioned at opposite sides of the central axis, and the multiple first ejector-pin portions are pairwise symmetrical about the central axis.

In a possible implementation, at least one of the multiple first ejector-pin portions is positioned on the central axis. Each of the at least one of the multiple first ejector-pin portions on the central axis is symmetrical about the central axis.

In a possible implementation, the lower plastic member defines a first groove. The first groove is recessed from the first surface toward the first protrusion. The first groove has a first bottom-wall, a first sidewall, and a second sidewall. The first sidewall and the second sidewall are positioned facing toward each other in the length direction of the lower plastic member. The lower plastic member defines a second groove. The second groove is recessed from the first surface toward the second protrusion. The second groove has a second bottom-wall, a third sidewall, and a fourth sidewall. The third sidewall and the fourth sidewall are positioned facing toward each other in the length direction of the lower plastic member. Multiple second ejector-pin portions are provided on the first bottom-wall and the second bottom-wall. The multiple second ejector-pin portions are pairwise symmetrical about the central axis.

In a possible implementation, the first groove is partitioned into several first flow-guiding grooves. The several first flow-guiding grooves are sequentially arranged in the width direction of the lower plastic member. The several first flow-guiding grooves have equal volumes. A length dimension of each of the multiple first flow-guiding grooves ranges from 12.00 mm to 16.00 mm in the width direction of the lower plastic member. A width dimension of each of the multiple first flow-guiding grooves ranges from 7.00 mm to 11.00 mm in the length direction of the lower plastic member. The second groove is partitioned into several second flow-guiding grooves. The several second flow-guiding grooves are sequentially arranged in the width direction of the lower plastic member. The several second flow-guiding grooves have equal volumes. A length dimension of each of the multiple second flow-guiding grooves ranges from 12.00 mm to 14.00 mm in the width direction of the lower plastic member. A width dimension of each of the multiple second flow-guiding grooves ranges from 7.00 mm to 11.00 mm in the length direction of the lower plastic member.

In a possible implementation, each of the multiple first ejector-pin portions has a circular abutment surface. Each of the multiple second ejector-pin portions has a circular abutment surface. A radius of the abutment surface of each of the multiple first ejector-pin portions is larger than a radius of the abutment surface of each of the multiple second ejector-pin portions.

In a possible implementation, the radius of the abutment surface of each of the multiple second ejector-pin portions ranges from 1.5 mm to 3.0 mm.

In a possible implementation, the first groove has two end walls that are positioned facing toward each other in the width direction of the lower plastic member. The several first flow-guiding grooves are implemented as four first flow-guiding grooves. One of the multiple second ejector-pin portions is positioned in each of the four first flow-guiding grooves. In the width direction of the lower plastic member, second ejector-pin portions in outermost two of the four first flow-guiding grooves are respectively adjacent to the two end walls of the first groove, and second ejector-pin portions in middle two of the four first flow-guiding grooves are respectively positioned at opposite sides of the central axis and are adjacent to each other. Second ejector-pin portions in the four first flow-guiding grooves are all adjacent to a sidewall of the first groove and are arranged at intervals in a length direction of the first groove.

In a possible implementation, a distance between a second ejector-pin portion in each of the four first flow-guiding grooves and any one of groove walls of the corresponding first flow-guiding groove is greater than or equal to 0.55 mm.

In a possible implementation, the second groove has two end walls that are positioned facing toward each other in the width direction of the lower plastic member. The several second flow-guiding grooves are implemented as four second flow-guiding grooves. One of the multiple second ejector-pin portions is positioned in each of the four second flow-guiding grooves. In the width direction of the lower plastic member, second ejector-pin portions in outermost two of the four second flow-guiding grooves are respectively adjacent to the two end walls of the second groove, and second ejector-pin portions in middle two of the four second flow-guiding grooves are respectively positioned at opposite sides of the central axis and are adjacent to each other. Second ejector-pin portions in the four second flow-guiding grooves are all adjacent to a sidewall of the second groove and are arranged at intervals in a length direction of the second groove.

In a possible implementation, a distance between a second ejector-pin portion in each of the four second flow-guiding grooves and any one of groove walls of the corresponding second flow-guiding groove is greater than or equal to 0.55 mm.

In a possible implementation, multiple third ejector-pin portions are provided at intersections of the several first ribs and the several second ribs. The multiple third ejector-pin portions are pairwise symmetrical about the central axis.

In a possible implementation, each of the multiple third ejector-pin portions has a circular abutment surface. A radius of the abutment surface of each of the multiple first ejector-pin portions is larger than a radius of the abutment surface of each of the multiple third ejector-pin portions.

In a possible implementation, the through groove includes a first sub-groove and two second sub-grooves. In the width direction of the lower plastic member, the two second sub-grooves are respectively positioned at opposite sides of the first sub-groove, and each of the two second sub-grooves is in communication with the first sub-groove. In the length direction of the lower plastic member, a width dimension of the first sub-groove is larger than a width dimension of each of the two second sub-grooves.

In a second aspect, the present provides an end-cover assembly. The end-cover assembly includes an end cover and the lower plastic member in the first aspect. The end cover is provided with an explosion-proof valve. The lower plastic member defines a through groove. The through groove includes a first sub-groove and two second sub-grooves. In the width direction of the lower plastic member, the two second sub-grooves are respectively positioned at opposite sides of the first sub-groove, and each of the two second sub-grooves is in communication with the first sub-groove. The lower plastic member is mounted on a surface of the end cover. The first surface of the lower plastic member is positioned facing toward the end cover. In the thickness direction of the end-cover assembly, an orthographic projection of the explosion-proof valve falls within an orthographic projection of the first sub-groove.

In a third aspect, the present disclosure provides an energy storage apparatus. The energy storage apparatus includes a housing, an electrode assembly, and the end-cover assembly in the second aspect. The housing has an opening. The housing defines an accommodating cavity therein. The electrode assembly is accommodated in the accommodating cavity. The end-cover assembly covers the opening.

In a fourth aspect, the present disclosure provides an electricity-consumption device. The electricity-consumption device includes the energy storage apparatus in the third aspect. The energy storage apparatus is configured to store electrical energy.

In the present disclosure, the injection-molded portion on the surface of the protruding block of the lower plastic member, the injection-molded portion on the surface of the first protrusion of the lower plastic member, and the injection-molded portion on the surface of the second protrusion of the lower plastic member are positioned at the same side of the lower plastic member in the width direction of the lower plastic member. When the lower plastic member is injection-molded in the mold, the molten plastic liquid can be injected simultaneously from the positions of the three injection-molded portions, thereby speeding up the process of filling the mold cavity with the molten plastic liquid, shortening the injection molding time of the lower plastic member, and improving the production efficiency of the lower plastic member. In addition, in the length direction of the lower plastic member, the protruding block is positioned in the middle of the lower plastic member, and the first protrusion and the second protrusion are respectively positioned at the two opposite ends of the lower plastic member. The protruding block, the first protrusion, and the second protrusion are three three-dimensional structures protruding from the lower-plastic-member body. A flow channel of each three-dimensional structure is in communication with a flow channel of the lower-plastic-member body to define a substantially "Z"-shaped flow channel. The "Z"-shaped flow channel has two right-angled corners and a simple structure. An extension direction of the protruding block, an extension direction of the first protrusion, and an extension direction of the second protrusion are all consistent with a flow direction of the initially injected high-speed molten plastic liquid. The molten plastic liquid is injected at a high speed from the positions of the three injection-molded portions, so that the molten plastic liquid can quickly fill the right-angled corners of the flow channel, thereby avoiding the formation of vortices at the right-angled corners and in turn avoiding the reduction of the structural strength of the lower plastic member at the positions corresponding to the right-angled corners. After the molten plastic liquid passes through the right-angled corners and enters the large-area mold cavity of the lower-plastic-member body, the flow rate becomes relatively slow, so that the large-area mold cavity of the lower-plastic-member body can be filled more uniformly, thereby improving the production yield of the lower plastic member.

### BRIEF DESCRIPTION OF THE DRAWINGS

To more clearly illustrate the technical solutions of the present disclosure, the following briefly introduces the accompanying drawings required for implementations. Obviously, the accompanying drawings described below are merely some implementations of the present disclosure. For those of ordinary skill in the art, other accompanying drawings can be obtained based on these accompanying drawings without any creative effort.
FIG. 1 is an application scenario view of an energy storage apparatus provided in embodiments of the present disclosure.
FIG. 2 is a structural schematic view of the energy storage apparatus illustrated in FIG. 1.
FIG. 3 is an exploded schematic view of an end-cover assembly of the energy storage apparatus illustrated in FIG. 2.
FIG. 4 is a structural schematic view of an end cover illustrated in FIG. 3.
FIG. 5 is a structural schematic view of the end cover illustrated in FIG. 4 from another angle.
FIG. 6 is a structural schematic view of a lower plastic member illustrated in FIG. 3.
FIG. 7 is a schematic structural view of the lower plastic member illustrated in FIG. 6 from a second angle.
FIG. 8A is a schematic structural view of the lower plastic member illustrated in FIG. 6 from a third angle, in which all ejector-pin portions are shown.
FIG. 8B is a schematic structural view of the lower plastic member illustrated in FIG. 6 from a third angle, in which first ejector-pin portions are omitted.
FIG. 9 is a partial cross-sectional structural view of the lower plastic member illustrated in FIG. 6.
FIG. 10 is a schematic structural view of assembly of the end cover illustrated in FIG. 4 and a lower plastic member.

Description of reference signs of the accompanying drawings: 5000 - energy storage system, 4100 - first electrical-energy conversion apparatus, 4200 - second electrical-energy conversion apparatus, 3000 - first electricity-consumption device, 2000 - second electricity-consumption device, 1000 - energy storage apparatus, 100 - end-cover assembly, 200 - electrode assembly, 10 - lower plastic member, 40 - end cover, 50 - upper plastic assembly, 60 - pressing-sheet assembly, 70 - electrode terminal-post, 71 - positive terminal-post, 72 - negative terminal-post, 51 - first upper plastic member, 52 - second upper plastic member, 80 - sealing ring, 61 - first pressing sheet, 62 - second pressing sheet, 41 - end-cover body, 42 - explosion-proof valve, 44 - first through-hole, 45 - second through-hole, 46 - electrolyte injection hole, 411 - front surface, 412 - rear surface, 418 - welding groove, 11 - lower-plastic-member body, 111 - first surface, 112 - second surface, 113 - first terminal-post through-hole, 114 - liquid injection through-hole, 115 - second terminal-post through-hole, 118 - third surface, 119 - fourth surface, 12 - through groove, 121 - first sub-groove, 122 - second sub-groove, 1211 - first wall, 1212 - second wall, 1211a - first sub-wall, 1211b - second sub-wall, 1212a - third sub-wall, 1212b - fourth sub-wall, 1221 - third wall, 1222 - fourth wall, 1223 - fifth wall, 13 - protruding block, 131 - first side-surface, 132 - second side-surface, 14 - explosion-proof grid, 141 - first rib, 142 - second rib, 1411 - first sub-rib, 1412 - second sub-rib, 1413 - third sub-rib, 15 - first protrusion, 16 - second protrusion, 151 - third side-surface, 152 - fourth side-surface, 17 - first groove, 171 - first bottom-wall, 172 - first sidewall, 173 - second sidewall, 174 - first reinforcing rib, 175 - first flow-guiding groove, 178 - first flow-guiding hole, 161 - fifth side-surface, 162 - sixth side-surface, 18 - second groove, 181 - second bottom-wall, 182 - third sidewall, 183 - fourth sidewall, 184 - second reinforcing rib, 185 - second flow-guiding groove, 188 - second flow-guiding hole, 19 - injection-molded portion, S1 - first ejector-pin portion, S11 - abutment surface, S2 - second ejector-pin portion, S3 - third ejector-pin portion, A - central axis.

### DETAILED DESCRIPTION

The following will describe technical solutions of embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electrical energy at present is to develop green energy such as photovoltaic and wind power to replace fossil energy. At present, generation of green electrical energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage will cause loss of the power. Therefore, "curtailment of wind and photovoltaics" may occur due to insufficient power demand or insufficient power-grid admitting ability, and energy storage is required to solve these problems. That is, electrical energy is stored by converting it into other forms of energy by physical or chemical means, and energy is released by converting it into electrical energy when needed. In brief, energy storage is similar to a large "power bank", which stores electrical energy when photovoltaics and wind energy are sufficient and releases stored electric power when needed.

Taking electrochemical energy storage as an example, an energy storage apparatus is provided in the present disclosure. The energy storage apparatus includes one group of chemical batteries. Chemical elements in the chemical batteries can be used as an energy storage medium to implement a charging/discharging process through chemical reaction or change of the energy storage medium. In brief, electrical energy generated by solar energy and wind energy is stored in the chemical batteries. When the usage of external electrical energy reaches a peak, the power stored in the chemical batteries is released for use, or is transferred to a place where the power is scarce for reuse.

At present, energy storage may be applied in various application scenarios, including (wind/solar) power-generation-side energy storage, grid-side energy storage, base-station-side energy storage, user-side energy storage, etc. Corresponding types of energy storage apparatuses include the following.
(1) A large-sized energy storage container applied in a grid-side energy-storage scenario. The energy storage container may serve as a high-quality active and reactive regulation power source in the grid, which can realize matching of electrical energy loads in time and space, enhance the capacity for integration of renewable energy, and is of great significance in the backup of the grid system, relieving the pressure of power supply at a peak load, and peak shaving and frequency modulation.
(2) A small and medium-sized energy storage cabinet applied in a user-side industrial and commercial energy-storage scenario (banks, shopping malls, etc.). The small and medium-sized energy storage cabinet mainly operates in a "peak shaving and valley filling" mode. Based on the demand for electricity, there may be a significant price difference in electricity prices at peak and valley periods. When the user has an energy storage device, in order to reduce cost, an energy storage cabinet/box may be usually charged during an electricity-price valley period, and the electricity in the energy storage device may be usually released for use during the electricity-price peak period to save electricity cost.

It may be noted that the above-described devices, such as the energy storage container, the small and medium-sized energy storage cabinet, and the small household energy storage container, including the energy storage apparatus can be understood as electricity-consumption devices.

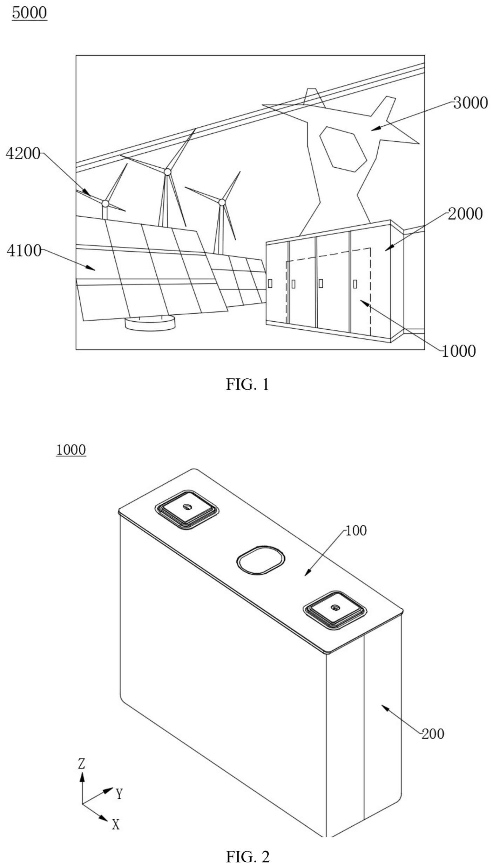

Reference can be made to FIG. 1, which is a schematic view of an application scenario of an energy storage apparatus provided in embodiments of the present disclosure. An energy storage apparatus provided in embodiments of the present disclosure is applied to an energy storage system 5000. The energy storage system 5000 includes a first electrical-energy conversion apparatus (photovoltaic panel) 4100, a second electrical-energy conversion apparatus (wind turbine) 4200, a first electricity-consumption device (power grid) 3000, a second electricity-consumption device (base station) 2000, and an energy storage apparatus 1000. The energy storage system 5000 further includes an energy storage cabinet. The energy storage apparatus 1000 is mounted in the energy storage cabinet. The energy storage cabinet may be mounted outdoors. Specifically, the first electrical-energy conversion apparatus 4100 can convert solar energy into electrical energy during the electricity-price valley period. The energy storage apparatus 1000 is configured to store the electrical energy and provide the electrical energy to the first electricity-consumption device 3000 or the second electricity-consumption device 2000 during a power-consumption peak period, or supply electricity when there is an outage/blackout in the first electricity-consumption device 3000 or the second electricity-consumption device 2000. The second electrical-energy conversion apparatus 4200 can convert wind energy into electrical energy. The energy storage apparatus 1000 is configured to store the electrical energy and provide the electrical energy to the first electricity-consumption device 3000 or the second electricity-consumption device 2000 during the power-consumption peak period, or supply electricity when there is an outage/blackout in the first electricity-consumption device 3000 or the second electricity-consumption device 2000. The electrical energy may be transmitted using a high voltage cable.

It may be noted that the above first electricity-consumption device 3000, the second electricity-consumption device 2000, and other devices including the energy storage apparatus can be understood as electricity-consumption devices.

The number of energy storage apparatuses 1000 may be multiple, and the multiple energy storage apparatuses 1000 are connected in series or in parallel with each other. In this embodiment, "multiple" means two or more.

It can be understood that the energy storage apparatus 1000 may include, but is not limited to, a battery, a battery module, a battery pack, a battery system, and the like. An actual application form of the energy storage apparatus 1000 provided in embodiments of the present disclosure may be, but is not limited to, the listed products, and may also be other application forms. The embodiments of the present disclosure do not strictly limit the application form of the energy storage apparatus 1000. The embodiments of the present disclosure only take the energy storage apparatus 1000 as a multi-cell battery as an example for illustration.

Reference can be made to FIG. 2, which is a schematic structural view of the energy storage apparatus illustrated in FIG. 1. The energy storage apparatus 1000 includes a housing (not shown in the figure), an end-cover assembly 100, and an electrode assembly 200. The housing has an opening and defines an accommodating cavity. The electrode assembly 200 is accommodated in the accommodating cavity. The end-cover assembly 100 covers the opening. The housing surrounds the periphery and bottom of the electrode assembly 200. The housing is sealingly connected to the end-cover assembly 100.

In this embodiment, an insulating film (not shown in the figure) is also wrapped around the electrode assembly 200 to protect an electrode core and prevent the electrode core from being scratched. The insulating film is wrapped on an outer surface of the electrode assembly 200, and a side edge of the insulating film is thermally fused and bonded to the end-cover assembly 100.

For convenience of description, a length direction of the end-cover assembly 100 is defined as an X-axis direction, a width direction of the end-cover assembly 100 is defined as a Y-axis direction, and a thickness direction of the end-cover assembly 100 is defined as a Z-axis direction. The X-axis direction, the Y-axis direction, and the Z-axis direction are mutually perpendicular in pairs. Orientational terms such as "upper", "lower", and the like mentioned in the description of embodiments of the present disclosure are described based on orientations illustrated in FIG. 2 of the specification, where the positive direction toward the Z-axis direction is considered as "upper" and the negative direction toward the Z-axis direction is considered as "lower", which do not form a limitation to the energy storage apparatus 1000 in practical application scenarios. As used in the following description, "the same", "identical", "equal", or "parallel" all allow a certain tolerance to exist.

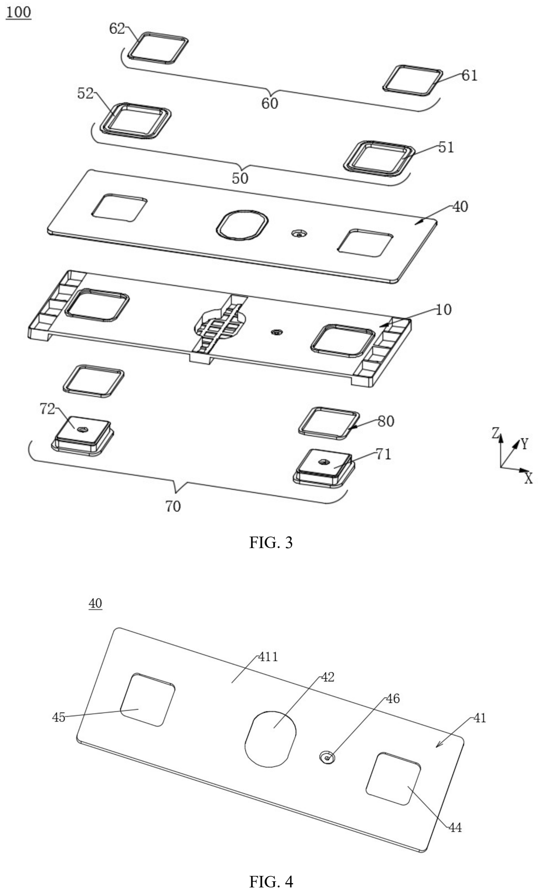

Reference can be made to FIG. 3, which is an exploded schematic view of an end-cover assembly of the energy storage apparatus illustrated in FIG. 2. The end-cover assembly 100 includes a lower plastic member 10 and an end cover 40. In this embodiment, the end cover 40 is a smooth aluminum member, and the lower plastic member 10 is made of a plastic material and is insulated. The end-cover assembly 100 further includes an upper plastic assembly 50, a pressing-sheet assembly 60, and an electrode terminal-post 70. Specifically, the end cover 40 and the lower plastic member 10 are stacked, and the lower plastic member 10 is configured to insulate the end cover 40 from the electrode assembly 200. The upper plastic assembly 50 and the end cover 40 are stacked, and the upper plastic assembly 50 is positioned at the side of the end cover 40 facing away from the lower plastic member 10. The electrode terminal-post 70 includes a positive terminal-post 71 and a negative terminal-post 72. The upper plastic assembly 50 includes a first upper plastic member 51 and a second upper plastic member 52. The first upper plastic member 51 and the second upper plastic member 52 are arranged side by side at both ends of the end cover 40 in the length direction of the end-cover assembly 100 (X-axis direction). Both the first upper plastic member 51 and the second upper plastic member 52 define through holes, which are used for the positive terminal-post 71 and the negative terminal-post 72 to pass through, respectively. A sealing ring 80 is sleeved on each of the positive terminal-post 71 and the negative terminal-post 72. The pressing-sheet assembly 60 includes a first pressing sheet 61 and a second pressing sheet 62. The first pressing sheet 61 and the second pressing sheet 62 are stacked on the side of the upper plastic assembly 50 positioned facing away from the end cover 40, and are fixedly connected to the first upper plastic member 51 and the second upper plastic member 52, respectively.

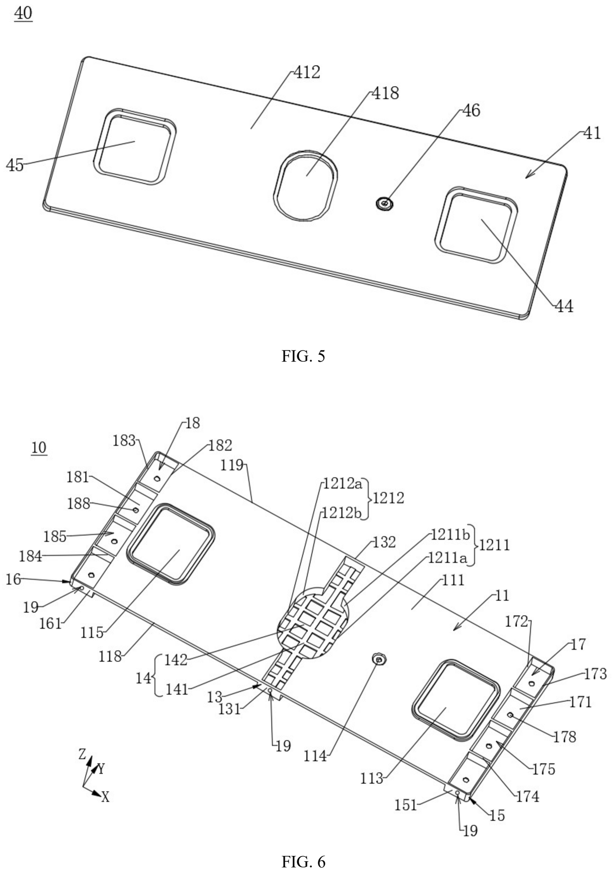

Reference can be made to FIG. 4 and FIG. 5, where FIG. 4 is a structural schematic view of an end cover illustrated in FIG. 3, and FIG. 5 is a structural schematic view of the end cover illustrated in FIG. 4 from another angle. In this embodiment, the end cover 40 includes an end-cover body 41 and an explosion-proof valve 42. The end-cover body 41 defines a first through-hole 44, a second through-hole 45, and an electrolyte injection hole 46. In the length direction of the end-cover assembly 100 (X-axis direction), the first through-hole 44, the electrolyte injection hole 46, the explosion-proof valve 42, and the second through-hole 45 are arranged at intervals in sequence.

Specifically, the end-cover body 41 is an elongated thin plate, and has a front surface 411 and a rear surface 412 that is positioned facing away from the front surface 411. At the middle position of the end-cover body 41, a welding groove 418 extending through the rear surface 412 and the front surface 411 is further defined, and the welding groove 418 is positioned between the first through-hole 44 and the second through-hole 45. The explosion-proof valve 42 is accommodated in the welding groove 418 and welded to a groove wall of the welding groove 418. When the internal pressure of the energy storage apparatus 1000 is excessive, the explosion-proof valve 42 will automatically open to relieve the pressure to prevent an explosion.

It can be understood that the first through-hole 44 and the second through-hole 45 are respectively defined at the opposite ends of the end-cover body 41 and penetrate through the front surface 411 and the rear surface 412. In this embodiment, the first through-hole 44 and the second through-hole 45 are respectively used for the positive terminal-post 71 and the negative terminal-post 72 of the energy storage apparatus 1000 to pass through. In other embodiments, the first through-hole 44 may be used for the negative terminal-post 72 to pass through, and the second through-hole 45 may be used for the positive terminal-post 71 to pass through.

The electrolyte injection hole 46 is positioned between the first through-hole 44 and the explosion-proof valve 42. During the electrolyte injection process of the energy storage apparatus 1000, an electrolyte is injected into the energy storage apparatus 1000 through the electrolyte injection hole 46 on the end cover 40.

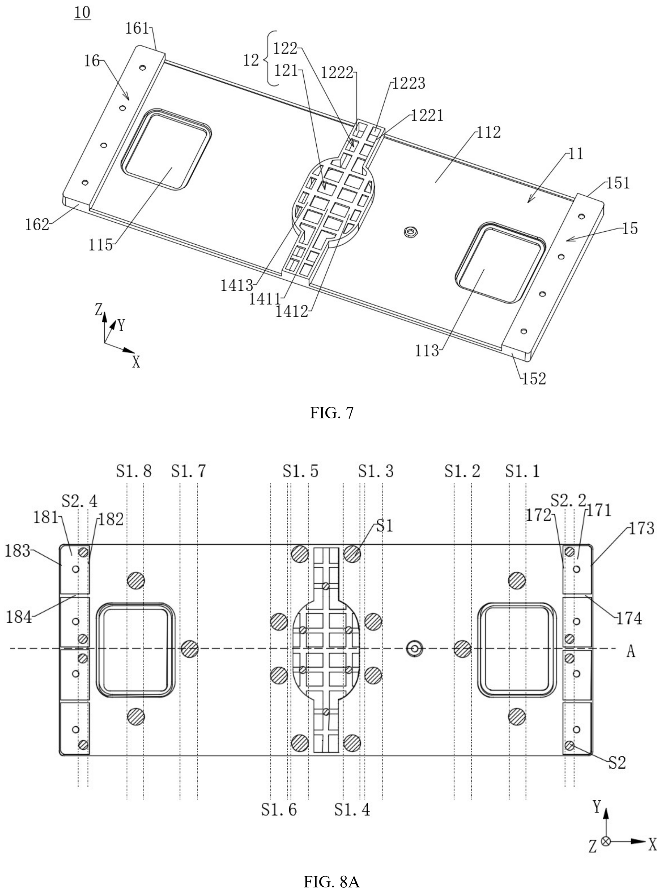

Reference can be made to FIG. 6 and FIG. 7, where FIG. 6 is a structural schematic view of a lower plastic member illustrated in FIG. 3, and FIG. 7 is a schematic structural view of the lower plastic member illustrated in FIG. 6 from a second angle. In this embodiment, the lower plastic member 10 includes a lower-plastic-member body 11. The lower-plastic-member body 11 is substantially a rectangular thin plate, and has a first surface 111, a second surface 112, a third surface 118, and a fourth surface 119. In the thickness direction of the lower plastic member 10 (Z-axis direction), the first surface 111 and the second surface 112 are positioned facing away from each other. In the width direction of the lower plastic member 10 (Y-axis direction), the third surface 118 and the fourth surface 119 are positioned facing away from each other. The third surface 118 and the fourth surface 119 are both connected between the first surface 111 and the second surface 112.

In this embodiment, the lower-plastic-member body 11 further defines a first terminal-post through-hole 113, a liquid injection through-hole 114, and a second terminal-post through-hole 115. In the length direction of the lower plastic member 10 (X-axis direction), the first terminal-post through-hole 113, the liquid injection through-hole 114, and the second terminal-post through-hole 115 are sequentially defined on the lower-plastic-member body 11.

In this embodiment, the first terminal-post through-hole 113 is a square through-hole. The first terminal-post through-hole 113 extends through the first surface 111 and the second surface 112. The first terminal-post through-hole 113 is used for the positive terminal-post 71 to pass through. In other embodiments, the first terminal-post through-hole 113 may be used for the negative terminal-post 72 to pass through.

In this embodiment, the second terminal-post through-hole 115 is a square through-hole. In the length direction of the lower plastic member 10 (X-axis direction), the second terminal-post through-hole 115 is positioned at one end of the lower-plastic-member body 11 away from the first terminal-post through-hole 113. The second terminal-post through-hole 115 extends through the first surface 111 and the second surface 112. The second terminal-post through-hole 115 is used for the negative terminal-post 72 to pass through. In other embodiments, the second terminal-post through-hole 115 may be used for the positive terminal-post 71 to pass through.

The liquid injection through-hole 114 extends through the first surface 111 and the second surface 112 of the lower-plastic-member body 11. The liquid injection through-hole 114 is positioned at one side of the lower-plastic-member body where the first terminal-post through-hole 113 is defined. The liquid injection through-hole 114 is used to cooperate with the electrolyte injection hole 46, to allow the electrolyte to pass through and flow into the electrode assembly 200.

As illustrated in FIG. 6 and FIG. 7, in this embodiment, the lower-plastic-member body 11 further defines a through groove 12. In the length direction of the lower plastic member 10 (X-axis direction), the through groove 12 is positioned in the middle of the lower-plastic-member body 11. In the thickness direction of the lower plastic member 10 (Z-axis direction), the through groove 12 extends through the first surface 111 and the second surface 112. The through groove 12 includes a first sub-groove 121 and two second sub-grooves 122.

In the length direction of the lower plastic member 10 (X-axis direction), the first sub-groove 121 has a first wall 1211 and a second wall 1212 that are positioned facing toward each other. The first wall 1211 includes a first sub-wall 1211a and two second sub-walls 1211b. The first sub-wall 1211a extends in the width direction of the lower plastic member 10 (Y-axis direction). In the width direction of the lower plastic member 10 (Y-axis direction), the two second sub-walls 1211b are respectively positioned at opposite sides of the first sub-wall 1211a and are connected to the first sub-wall 1211a. The two second sub-walls 1211b are arc-shaped and are curved away from the space between the first wall 1211 and the second wall 1212. The second wall 1212 includes a third sub-wall 1212a and two fourth sub-walls 1212b. The third sub-wall 1212a extends in the width direction of the lower plastic member 10 (Y-axis direction). In the width direction of the lower plastic member 10 (Y-axis direction), the two fourth sub-walls 1212b are respectively positioned at opposite sides of the third sub-wall 1212a and are connected to the third sub-wall 1212a. The two fourth sub-walls 1212b are arc-shaped and are curved away from the space between the first wall 1211 and the second wall 1212. In the length direction of the lower plastic member 10 (X-axis direction), the first sub-wall 1211a is positioned facing toward and parallel to the third sub-wall 1212a (a certain process tolerance is allowed), and the two second sub-walls 1211b are positioned facing toward the two fourth sub-walls 1212b respectively. It can be understood that the overall contour of the first sub-groove 121 is in the shape of an "oval racetrack".

The two second sub-grooves 122 are both rectangular through grooves. In the length direction of the lower plastic member 10 (X-axis direction), each of the two second sub-grooves 122 has a third wall 1221 and a fourth wall 1222 that are positioned facing toward each other. The third wall 1221 and the fourth wall 1222 are arranged in parallel (a certain process tolerance is allowed) and both extend in the width direction of the lower plastic member 10 (Y-axis direction). Each of the two second sub-grooves 122 further has a fifth wall 1223. The fifth wall 1223 extends in the length direction of the lower plastic member 10 (X-axis direction) and is connected between the third wall 1221 and the fourth wall 1222.

In the width direction of the lower plastic member 10 (Y-axis direction), the first sub-groove 121 is positioned at the middle position, and the two second sub-grooves 122 are respectively positioned at the opposite sides of the first sub-groove 121 and are both in communication with the first sub-groove 121. In the width direction of the lower plastic member 10 (Y-axis direction), the first sub-wall 1211a is connected between the two second sub-walls 1211b, and the two second sub-walls 1211b are respectively connected to the third walls 1221 of the two second sub-grooves 122, so that the first sub-wall 1211a, the two second sub-walls 1211b, and the two third walls 1221 together form the first groove sidewall of the through groove 12. In the width direction of the lower plastic member 10 (Y-axis direction), the third sub-wall 1212a is connected between the two fourth sub-walls 1212b, the two fourth sub-walls 1212b are respectively connected to the fourth walls 1222 of the two second sub-grooves 122, so that the third sub-wall 1212a, the two fourth sub-walls 1212b, and the two fourth walls 1222 together form the second groove sidewall of the through groove 12. In the width direction of the lower plastic member 10 (Y-axis direction), the fifth walls 1223 of the two second sub-grooves 122 are positioned facing toward each other, and the two fifth walls 1223 respectively serve as the third groove sidewall of the through groove 12 and the fourth groove sidewall of the through groove 12. In the length direction of the lower plastic member 10 (X-axis direction), a distance between the first sub-wall 1211a and the third sub-wall 1212a is larger than a distance between the third wall 1221 and the fourth wall 1222, that is, the width dimension of the first sub-groove 121 is larger than the width dimension of the second sub-groove 122. In the thickness direction of the lower plastic member 10 (Z-axis direction), the cross-sectional area of the first sub-groove 121 is larger than the cross-sectional area of each of the two second sub-grooves 122.

The through groove 12 is used to lead the pressure gas generated in the electrode assembly 200 to the explosion-proof valve 42. The cross-sectional area of the first sub-groove 121 is larger than the cross-sectional area of each of the two second sub-grooves 122, which helps the gas generated in the electrode assembly 200 to flow to the explosion-proof valve 42, thereby facilitating the opening of the explosion-proof valve 42. By respectively defining two second sub-grooves 122 at both sides of the first sub-groove 121, the area of the through groove 12 can be increased, thereby enlarging the flow area for the pressure gas toward the explosion-proof valve 42.

In this embodiment, the thickness part of the lower plastic member 10 where the through groove 12 is defined is larger than the thickness of other parts of the lower plastic member 10. Specifically, the through groove 12 is recessed from the first surface 111 of the lower-plastic-member body 11 toward the second surface 112 of the lower-plastic-member body 11, and a protruding block 13 is formed on the second surface 112. The through groove 12 extends through both the first surface 111 and the protruding block 13. The groove sidewall of the through groove 12 includes a part between the first surface 111 and the second surface 112 and a part protruding from the second surface 112. In the width direction of the lower plastic member 10 (Y-axis direction), the protruding block 13 has a first side-surface 131 and a second side-surface 132 that are positioned facing away from each other.

As illustrated in FIG. 6 and FIG. 7, in this embodiment, the lower plastic member 10 further includes an explosion-proof grid 14. The explosion-proof grid 14 is a grid-shaped thin plate. The explosion-proof grid 14 is mounted in the through groove 12, and is connected to an end of the groove sidewall of the through groove 12 protruding from the second surface 112. In the thickness direction of the lower plastic member 10 (Z-axis direction), the explosion-proof grid 14 covers the through groove 12.

The explosion-proof grid 14 includes several first ribs 141 and several second ribs 142. The several first ribs 141 are arranged side by side and at intervals in the length direction of the lower plastic member 10 (X-axis direction), and each first rib 141 extends in the width direction of the lower plastic member 10 (Y-axis direction). The several first ribs 141 include one first sub-rib 1411. The first sub-rib 1411 is connected between the two fifth walls 1223, that is, it is equivalent that the first sub-rib 1411 is connected between the third groove sidewall of the through groove 12 and the fourth groove sidewall of the through groove 12. The several first ribs 141 include one second sub-rib 1412. The second sub-rib 1412 is connected between the two second sub-walls 1211b. The several first ribs 141 include one third sub-rib 1413. The third sub-rib 1413 is connected between the two fourth sub-walls 1212b. In this embodiment, the number of the first ribs 141 is three.

The several second ribs 142 are arranged side by side and at intervals in the width direction of the lower plastic member 10 (Y-axis direction), and each second rib 142 is connected between the first groove sidewall of the through groove 12 and the second groove sidewall of the through groove 12. Specifically, two of the several second ribs 142 are connected between the third wall 1221 and the fourth wall 1222 of one second sub-groove 122. Two of the several second ribs 142 are connected between the third wall 1221 and the fourth wall 1222 of the other second sub-groove 122. Five of the several second ribs 142 are connected between the first wall 1211 and the second wall 1212 of the first sub-groove 121. In this embodiment, the number of the second ribs 142 is nine. The first sub-rib 1411, the second sub-rib 1412, the third sub-rib 1413, and the several second ribs 142 form the grid-shaped explosion-proof grid 14.

Since tabs or blue films of the energy storage apparatus 1000 are prone to rupture and generate fragments during transportation. By arranging the explosion-proof grid 14 in the through groove 12, the explosion-proof failure caused by the fragments of the tabs or blue films floating to a position below the explosion-proof valve 42 and blocking the gas passage can be avoided, and the direct contact between the tabs and the explosion-proof valve 42 can also be prevented. The several first ribs 141 and the several second ribs 142 are arranged in a crisscross pattern, so that the structural strength of the explosion-proof grid 14 can be enhanced.

As illustrated in FIG. 6 and FIG. 7, in this embodiment, the lower plastic member 10 further includes a first protrusion 15 and a second protrusion 16. The first protrusion 15 and the second protrusion 16 protrude from the second surface 112 of the lower-plastic-member body 11, and are positioned at the opposite ends of the lower plastic member 10 in the length direction (X-axis direction). The first protrusion 15 is adjacent to the first terminal-post through-hole 113, and the first protrusion 15 is positioned at the side of the first terminal-post through-hole 113 facing away from the through groove 12. The second protrusion 16 is adjacent to the second terminal-post through-hole 115, and the second protrusion 16 is positioned at the side of the second terminal-post through-hole 115 facing away from the through groove 12.

The first protrusion 15 is in the shape of a rectangular block and extends in the width direction of the lower plastic member 10 (Y-axis direction). In this embodiment, in the length direction of the lower plastic member 10 (X-axis direction), one side of the first protrusion 15 is flush with an end edge of the lower-plastic-member body 11. In the width direction of the lower plastic member 10 (Y-axis direction), two ends of the first protrusion 15 are flush with two side edges of the lower-plastic-member body 11, respectively. It can be understood that the length dimension of the first protrusion 15 is equal to the width dimension of the lower-plastic-member body 11. In the width direction of the lower plastic member 10 (Y-axis direction), the first protrusion 15 has a third side-surface 151 and a fourth side-surface 152 that are positioned facing away from each other.

As illustrated in FIG. 6, a first groove 17 is defined in a region of the first surface 111 of the lower-plastic-member body 11 positioned corresponding to the first protrusion 15. The first groove 17 is recessed from the first surface 111 toward the first protrusion 15 in the thickness direction of the lower plastic member 10 (Z-axis direction). The first groove 17 has a first bottom-wall 171, a first sidewall 172, and a second sidewall 173, and the first sidewall 172 and the third sidewall 172 are positioned facing toward each other in the length direction of the lower plastic member 10 (X-axis direction). The first groove 17 further has two end walls that are positioned facing toward each other in the width direction of the lower plastic member 10 (Y-axis direction). By defining the first groove 17 in the corresponding region of the first protrusion 15, the depth of the first groove 17 can be ensured, so that the material of the lower plastic member 10 can be saved so as to facilitate the reduction of the manufacturing cost, and the weight of the lower plastic member 10 can also be reduced so as to facilitate the lightweight design of the energy storage apparatus 1000.

Specifically, in the thickness direction of the lower plastic member 10 (Z-axis direction), an orthographic projection of the first groove 17 completely overlaps an orthographic projection of the first protrusion 15, or the orthographic projection of the first groove 17 falls within the orthographic projection of the first protrusion 15. It can be understood that the contour of the first groove 17 is the same as or similar to the outer contour of the first protrusion 15.

Several first reinforcing ribs 174 are provided in the first groove 17. The several first reinforcing ribs 174 protrude from the first bottom-wall 171 and are connected between the first sidewall 172 and the second sidewall 173. In the width direction of the lower plastic member 10 (Y-axis direction), the several first reinforcing ribs 174 are arranged at intervals and partition the first groove 17 into several first flow-guiding grooves 175. In the width direction of the lower plastic member 10, the several first flow-guiding grooves 175 are arranged in sequence. The several first reinforcing ribs 174 can enhance the strength of the first groove 17. Specifically, in this embodiment, the number of the first reinforcing ribs 174 is three, and the three first reinforcing ribs 174 partition the first groove 17 into four first flow-guiding grooves 175 with equal volumes. In fact, groove walls of the several first flow-guiding grooves 175 are formed by the sidewalls of the first groove 17, the end walls of the first groove 17, and the several first reinforcing ribs 174. In this embodiment, in the length direction of the lower plastic member 10 (X-axis direction), a distance between the first sidewall 172 and the second sidewall 173 ranges from 7.00 mm to 11.00 mm. Specifically, the distance between the first sidewall 172 and the second sidewall 173 is 9.22 mm. It can be understood that the width dimension of the first flow-guiding groove 175 ranges from 7.00 mm to 11.00 mm, and specifically, the width dimension of the first flow-guiding groove 175 is 9.22 mm. In the width direction of the lower plastic member 10 (Y-axis direction), a distance between two adjacent first reinforcing ribs 174 ranges from 12.00 mm to 16.00 mm. Specifically, the distance between two adjacent first reinforcing ribs 174 is 14.72 mm. It can be understood that the length dimension of the first flow-guiding groove 175 ranges from 12.00 mm to 16.00 mm, and specifically, the length dimension of the first flow-guiding groove 175 is 14.72 mm.

The lower plastic member 10 further defines several first flow-guiding holes 178. The several first flow-guiding holes 178 are defined on the first bottom-wall 171 of the first groove 17, and each first flow-guiding hole 178 extends through the first protrusion 15 and the first surface 111 in the thickness direction of the lower plastic member 10 (Z-axis direction). That is, in the thickness direction of the lower plastic member 10 (Z-axis direction), each first flow-guiding hole 178 extends through the bottom wall of the first groove 17. The several first flow-guiding holes 178 are arranged at intervals in the length direction of the first groove 17. Specifically, in this embodiment, the first flow-guiding holes 178 are arranged in the first flow-guiding grooves 175. The number of the first flow-guiding holes 178 is four, and one first flow-guiding hole 178 is defined in each first flow-guiding groove 175. During the liquid injection or use, the first flow-guiding holes 178 can play the following role. The electrolyte splashed from the liquid injection through-hole 114 into the space between the end cover 40 and the first surface 111 of the lower plastic member 10 can flow through the first groove 17, pass through the several first flow-guiding holes 178, and then flow back to the electrode assembly 200 through the first flow-guiding holes 178, so as to realize the reflux and reuse of the electrolyte. Therefore, the electrolyte can be prevented from remaining in the space between the end cover 40 and the first surface 111 of the lower plastic member 10, thereby avoiding the accumulation of electrolyte on the first surface 111 of the lower plastic member 10 and in the first groove 17, and improving the wettability of the electrode assembly 200.

The second protrusion 16 is in the shape of a rectangular block and extends in the width direction of the lower plastic member 10 (Y-axis direction). In this embodiment, in the length direction of the lower plastic member 10 (X-axis direction), one side of the second protrusion 16 is flush with the end edge of the lower-plastic-member body 11. In the width direction of the lower plastic member 10 (Y-axis direction), two ends of the second protrusion 16 are flush with two side edges of the lower-plastic-member body 11, respectively. It can be understood that the length dimension of the second protrusion 16 is equal to the width dimension of the lower-plastic-member body 11. In the width direction of the lower plastic member 10 (Y-axis direction), the second protrusion 16 has a fifth side-surface 161 and a sixth side-surface 162 that are positioned facing away from each other.

As illustrated in FIG. 6, a second groove 18 is defined in a region of the first surface 111 of the lower-plastic-member body 11 positioned corresponding to the second protrusion 16. The second groove 18 is recessed from the first surface 111 toward the second protrusion 16 in the thickness direction of the lower plastic member 10 (Z-axis direction). The second groove 18 has a second bottom-wall 181, a third sidewall 182, and a fourth sidewall 183, and the third sidewall 182 and the fourth sidewall 183 are positioned facing toward each other in the length direction of the lower plastic member 10 (X-axis direction). The second groove 18 further has two end walls that are positioned facing toward each other in the width direction of the lower plastic member 10 (Y-axis direction). By defining the second groove 18 in the corresponding region of the second protrusion 16, the depth of the second groove 18 can be ensured, so that the material of the lower plastic member 10 can be saved so as to facilitate the reduction of the manufacturing cost, and the weight of the lower plastic member 10 can also be reduced so as to facilitate the lightweight design of the energy storage apparatus 1000.

Specifically, in the thickness direction of the lower plastic member 10 (Z-axis direction), an orthographic projection of the second groove 18 completely overlaps an orthographic projection of the second protrusion 16, or the orthographic projection of the second groove 18 falls within the orthographic projection of the second protrusion 16. It can be understood that the contour of the second groove 18 is the same as or similar to the outer contour of the second protrusion 16.

Several second reinforcing ribs 184 are provided in the second groove 18. The several second reinforcing ribs 184 protrude from the second bottom-wall 181 and are connected between the third sidewall 182 and the fourth sidewall 183. In the width direction of the lower plastic member 10 (Y-axis direction), the several second reinforcing ribs 184 are arranged at intervals and partition the second groove 18 into several second flow-guiding grooves 185. In the width direction of the lower plastic member 10, the several second flow-guiding grooves 185 are arranged in sequence. The several second reinforcing ribs 184 can enhance the strength of the second groove 18. Specifically, in this embodiment, the number of the second reinforcing ribs 184 is three, and the three second reinforcing ribs 184 partition the second groove 18 into four second flow-guiding grooves 185 with equal volumes. In fact, groove walls of the several second flow-guiding grooves 185 are formed by the sidewalls of the second groove 18, the end walls of the second groove 18, and the several second reinforcing ribs 184. In this embodiment, in the length direction of the lower plastic member 10 (X-axis direction), a distance between the third sidewall 182 and the fourth sidewall 183 ranges from 7.00 mm to 11.00 mm. Specifically, the distance between the third sidewall 182 and the fourth sidewall 183 is 9.22 mm. It can be understood that the width dimension of the second flow-guiding groove 185 ranges from 7.00 mm to 11.00 mm, and specifically, the width dimension of the second flow-guiding groove 185 is 9.22 mm. In the width direction of the lower plastic member 10 (Y-axis direction), a distance between two adjacent second reinforcing ribs 184 ranges from 12.00 mm to 16.00 mm. Specifically, the distance between two adjacent second reinforcing ribs 184 is 14.72 mm. It can be understood that the length dimension of the second flow-guiding groove 185 ranges from 12.00 mm to 16.00 mm. Specifically, the length dimension of the second flow-guiding groove 185 is 14.72 mm.

The lower plastic member 10 further defines several second flow-guiding holes 188. The several second flow-guiding holes 188 are defined on the second bottom-wall 181 of the second groove 18, and each second flow-guiding hole 188 extends through the second protrusion 16 and the first surface 111 in the thickness direction of the lower plastic member 10 (Z-axis direction). That is, in the thickness direction of the lower plastic member 10, each second flow-guiding hole 188 extends through the bottom wall of the second groove 18. The several second flow-guiding holes 188 are arranged at intervals in the length direction of the second groove 18. Specifically, in this embodiment, the second flow-guiding holes 188 are arranged in the second flow-guiding grooves 185. The number of the second flow-guiding holes 188 is four, and one second flow-guiding hole 188 is defined in each second flow-guiding groove 185. During the liquid injection or use process, the second flow-guiding holes 188 can play the following role. The electrolyte splashed from the liquid injection through-hole 114 into the space between the end cover 40 and the first surface 111 of the lower plastic member 10 can flow through the second groove 18, pass through the several second flow-guiding holes 188, and then flow back to the electrode assembly 200 through the second flow-guiding holes 188, so as to realize the reflux and reuse of the electrolyte. Therefore, the electrolyte can be prevented from remaining in the space between the end cover 40 and the first surface 111 of the lower plastic member 10, thereby avoiding the accumulation of electrolyte on the first surface 111 of the lower plastic member 10 and in the second groove 18, and improving the wettability of the electrode assembly 200.

The lower plastic member 10 is manufactured by an injection molding process. During injection molding, molten plastic liquid melted at a high temperature is injected into a mold cavity of a mold (not shown in the figure) through an injection gate of the mold. After the molten plastic liquid fills the mold cavity, the temperature of the high-temperature molten plastic liquid is allowed to decrease so that the molten plastic liquid solidifies and is molded, followed by demolding, thereby obtaining the lower plastic member 10. An injection-molded portion is formed on the surface of the lower plastic member 10. On the one hand, from the perspective of the mold, the injection-molded portion corresponds in position to the injection gate of the mold. On the other hand, from the perspective of the lower plastic member 10, the injection-molded portion is a certain position on the outer surface of the lower plastic member 10.

It may be noted that when the plastic is molded in the mold, if the plastic is slightly excessive, a protrusion will remain at the injection-molded portion; and if the plastic is slightly insufficient, a recess will be defined at the injection-molded portion. When a protrusion remains, after demolding, if the protrusion is removed by cutting or grinding, the protrusion will not remain on the final product, and the injection-molded portion will form a flat structure flush with other parts. In some conditions, the protrusion may be retained. For the embodiments of the present disclosure, the injection-molded portion may be a protrusion, a recess, or a flat surface.

As illustrated in FIG. 6, in this embodiment, the lower plastic member 10 has multiple injection-molded portions 19. The multiple injection-molded portions 19 are distributed on the protruding block 13, the first protrusion 15, and the second protrusion 16, and are respectively positioned on one side of the protruding block 13, the first protrusion 15, and the second protrusion 16 in the width direction of the lower plastic member 10 (Y-axis direction).

In the length direction of the lower plastic member 10, the first protrusion 15 and the second protrusion 16 are respectively positioned at the opposite ends of the lower-plastic-member body 11. The protruding block 13 is positioned between the first protrusion 15 and the second protrusion 16, and is spaced apart from the first protrusion 15 and the second protrusion 16. The protruding block 13 has a first side-surface 131. The first protrusion 15 has a third side-surface 151. The second protrusion 16 has a fifth side-surface 161. The first side-surface 131, the third side-surface 151, and the fifth side-surface 161 are positioned at the same side of the lower plastic member 10 in the width direction of the lower plastic member 10 (Y-axis direction). The first side-surface 131, the third side-surface 151, and the fifth side-surface 161 are coplanar with the third surface 118. Each of the first side-surface 131, the third side-surface 151, and the fifth side-surface 161 of the lower plastic member 10 is provided with one injection-molded portion 19.

Specifically, in this embodiment, the number of injection-molded portions 19 is three, and the three injection-molded portions 19 are respectively positioned on the first side-surface 131 of the protruding block 13, the third side-surface 151 of the first protrusion 15, and the fifth side-surface 161 of the second protrusion 16. In other embodiments, the injection-molded portions 19 may also be respectively positioned on the second side-surface 132 of the protruding block 13, the fourth side-surface 152 of the first protrusion 15, and the sixth side-surface 162 of the second protrusion 16, as long as the injection-molded portions 19 are positioned at the same side of the lower plastic member 10 in the width direction of the lower plastic member 10 (Y-axis direction).

When the lower plastic member 10 is injection-molded in the mold, the molten plastic liquid can be injected simultaneously from the positions of the three injection-molded portions 19, thereby speeding up the process of filling the mold cavity with the molten plastic liquid, shortening the injection molding time of the lower plastic member 10, and improving the production efficiency of the lower plastic member 10. In addition, in the length direction of the lower plastic member 10 (X-axis direction), the protruding block 13 is positioned in the middle of the lower plastic member 10, and the first protrusion 15 and the second protrusion 16 are respectively positioned at the opposite ends of the lower plastic member 10, so that when the molten plastic liquid is injected from the positions of the three injection-molded portions 19, the mold cavity can be uniformly filled with the molten plastic liquid, thereby improving the production yield of the lower plastic member 10.

The first protrusion 15, the protruding block 13, and the second protrusion 16 are all three-dimensional structures protruding from the second surface 112 of the lower-plastic-member body 11. When the molten plastic liquid is injected from the three injection-molded portions 19, the molten plastic liquid flows in the thickness direction of the lower plastic member 10 in the flow channels of the three three-dimensional structures and then flows into the large-area mold cavity of the lower-plastic-member body 11, and on the other side of the lower plastic member 10 opposite to the three injection-molded portions 19 in the width direction of the lower plastic member 10 (Y-axis direction), the molten plastic liquid then enters the flow channels of the three three-dimensional structures from the large-area mold cavity of the lower-plastic-member body 11. Therefore, the flow channel of each three-dimensional structure is in communication with the flow channel of the lower-plastic-member body 11 to define a substantially "Z"-shaped flow channel. The "Z"-shaped flow channel has two right-angled corners and a simple structure. The extension direction of the first protrusion 15, the extension direction of the protruding block 13, and the extension direction of the second protrusion 16 are all consistent with the flow direction of the initially injected high-temperature molten plastic liquid. The molten plastic liquid is injected at a high speed from the positions of the three injection-molded portions 19, so that the molten plastic liquid can quickly fill the right-angled corners, thereby avoiding the formation of vortices at the right-angled corners and in turn avoiding the reduction of the structural strength of the lower-plastic-member body 11 at the positions corresponding to the right-angled corners. After the molten plastic liquid passes through the right-angled corners and enters the large-area mold cavity of the lower-plastic-member body 11, the flow rate becomes relatively slow, so that the large-area mold cavity of the lower-plastic-member body 11 can be filled more uniformly, thereby improving the production yield of the lower plastic member 10.

When the molten plastic liquid is injected into the mold, since the positions of the injection-molded portions 19 are on the same side of the lower plastic member 10 in the width direction of the lower plastic member 10 (Y-axis direction), the molten plastic liquid flows in the width direction of the lower plastic member 10 (Y-axis direction), that is, in the extension direction of the first ribs 141. The first ribs 141 are relatively long, and the extension direction of the first ribs 141 is consistent with the flow direction of the initially injected molten plastic liquid, so that the process of filling the flow channels of the first ribs 141 with the molten plastic liquid is smoother and more uniform. A part of the second rib 142 between two adjacent first ribs 141 is formed by the molten plastic liquid that branches from the flow channels of the two adjacent first ribs 141, is laterally redirected into the flow channel of the second rib 142, and then merges therein. Since the part of the second rib 142 between two adjacent first ribs 141 is relatively short, the molten plastic liquid diverted from the flow channels of the two adjacent first ribs 141 can rapidly merge in the flow channel of the second rib 142, thereby avoiding the following undesired situations. The flow rate of the molten plastic liquid is decreased, a weld mark is formed at the merging position, the structural strength of the second rib 142 is reduced, and then the structural strength of the explosion-proof grid 14 is reduced. The first sub-rib 1411 is connected between the third sidewall and the fourth sidewall of the through groove 12, so that by injecting the molten plastic liquid at the position of the injection-molded portion 19 on the protruding block 13, the molten plastic liquid can directly flow, within the mold, in the width direction of the lower plastic member 10 (Y-axis direction) through a flow channel corresponding to the first sub-rib 1411. The length dimension of the first sub-rib 1411 is close to the width dimension of the lower plastic member 10, so that by causing the flow direction of the molten plastic liquid to be the same as the extension direction of the first sub-rib 1411, the weld marks formed by uneven flow of the molten plastic liquid in the flow channel of the first sub-rib 1411 can be avoided, thereby avoiding the weld marks from reducing the strength of the first sub-rib 1411.

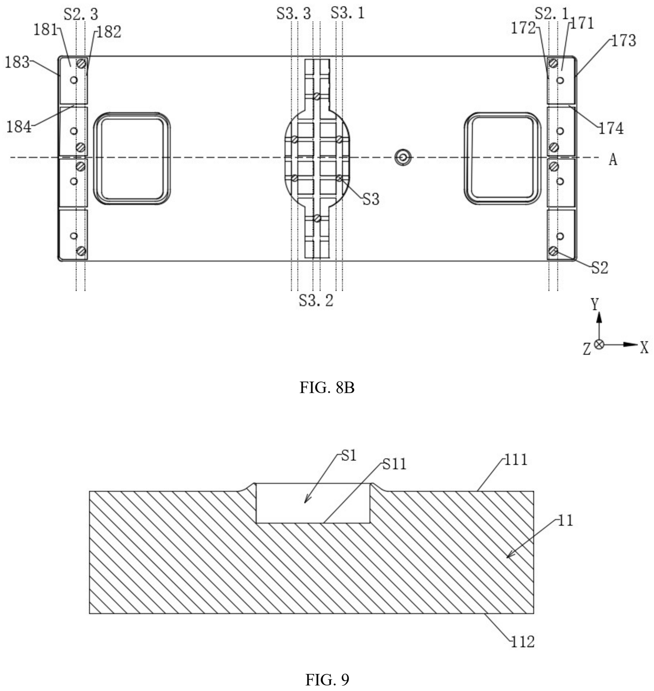

Reference can be made to FIG. 8A and FIG. 8B, where FIG. 8A is a schematic structural view of the lower plastic member illustrated in FIG. 6 from a third angle, in which all ejector-pin portions are shown, and FIG. 8B is a schematic structural view of the lower plastic member illustrated in FIG. 6 from a third angle, in which first ejector-pin portions are omitted. In this embodiment, the lower plastic member 10 is provided with multiple first ejector-pin portions S1, multiple second ejector-pin portions S2, and multiple third ejector-pin portions S3. The multiple first ejector-pin portions S1 are symmetrical about the central axis A. The multiple second ejector-pin portions S2 are symmetrical about the central axis A. The multiple third ejector-pin portions S3 are symmetrical about the central axis A. The multiple ejector-pin portions are the positions where the ejector pins (not shown in the figure) abut against the lower plastic member 10 after the lower plastic member 10 is molded in the mold, so as to push the molded lower plastic member out of the mold for demolding. The central axis A is a straight line extending in the length direction of the lower plastic member 10 (X-axis direction) and positioned in the middle of the lower plastic member 10 in the width direction (Y-axis direction). The central axis A is a virtual line established for the convenience of description, and does not actually exist on the lower plastic member 10.

It may be noted that in the embodiments of the present disclosure, the ejector-pin portions are parts of the final product structure of the lower plastic member 10, formed by the ejector pin applying an ejecting force onto the first surface 111 of the lower-plastic-member body 11. When the ejector pin has not contacted the lower plastic member 10, that is, when the demolding operation has not been performed, the ejector-pin portion may not be formed on the lower plastic member 10. In some embodiments, the structure of the ejector-pin portion may also be provided even before demolding, that is, when the ejector pin has not contacted the lower plastic member 10, the structure of the ejector-pin portion is already formed on the lower plastic member 10.

Reference can continue to be made to FIG. 8A. The multiple first ejector-pin portions S1 are positioned on the first surface 111 of the lower-plastic-member body 11. The multiple first ejector-pin portions S1 are divided into multiple groups, which can be referred to as first ejector-pin-portion groups. Each first ejector-pin-portion group has one or two first ejector-pin portions S1. When a first ejector-pin-portion group has only one first ejector-pin portion S1, the only first ejector-pin portion S1 is positioned on the central axis A. When a first ejector-pin-portion group has two first ejector-pin portions S1, the two first ejector-pin portions S1 are positioned aligned with each other in the width direction of the lower plastic member 10 (Y-axis direction) and are pairwise symmetrical about the central axis A. The multiple first ejector-pin-portion groups are arranged at intervals in the length direction of the lower plastic member 10 (X-axis direction). That is, there is at least one first ejector-pin portion S1 on the central axis A, and the at least one first ejector-pin portion S1 on the central axis A is symmetrical about the central axis A; and in the width direction of the lower plastic member 10, there are also first ejector-pin portions S1 at both sides of the central axis A, and the first ejector-pin portions S1 at both sides of the central axis A are pairwise symmetrical about the central axis A. In the length direction of the lower plastic member 10, the first ejector-pin portions S1 on the central axis A and the first ejector-pin portions S1 on both sides of the central axis A are arranged at intervals. It may be noted that "aligned" means that a line connecting the centers of the two is parallel to the corresponding direction. For example, if two first ejector-pin portions S1 are positioned aligned with each other in the width direction of the lower plastic member 10 (Y-axis direction), the line connecting the centers of the two first ejector-pin portions S1 is parallel to the width direction of the lower plastic member 10 (Y-axis direction). If two first ejector-pin portions S1 are positioned aligned with each other in the length direction of the lower plastic member 10 (X-axis direction), the line connecting the centers of the two first ejector-pin portions S1 is parallel to the length direction of the lower plastic member 10 (X-axis direction). The term "aligned" used hereinafter is defined in the same manner and will not be further described.

Specifically, in this embodiment, the multiple first ejector-pin portions S1 are divided into eight first ejector-pin-portion groups. First ejector-pin portions S1 in the first group S1.1 are close to the first terminal-post through-hole 113 and are spaced apart from the first terminal-post through-hole 113 in the width direction of the lower plastic member 10 (Y-axis direction). A first ejector-pin portion S1 in the second group S1.2 is positioned on the central axis A and is positioned at one side of the first terminal-post through-hole 113 facing away from the first groove 17. First ejector-pin portions S1 in the third group S1.3 are close to the central axis A and are positioned at a side edge of the first wall 1211. First ejector-pin portions S1 in the fourth group S1.4 are close to side edges of the lower-plastic-member body 11 and are positioned at side edges of the third walls 1221, respectively. First ejector-pin portions S1 in the fifth group S1.5 are close to side edges of the lower-plastic-member body 11 and are positioned at side edges of the fourth wall 1222, respectively. First ejector-pin portions S1 in the sixth group S1.6 are close to the central axis A and are positioned at a side edge of the second wall 1212. A first ejector-pin portion S1 in the seventh group S1.7 is positioned on the central axis A and is positioned at one side of the second terminal-post through-hole 115 facing away from the second groove 18. First ejector-pin portions S1 in the eighth group S1.8 are close to the second terminal-post through-hole 115 and are spaced apart from the second terminal-post through-hole 115 in the width direction of the lower plastic member 10 (Y-axis direction).

In the length direction of the lower plastic member 10 (X-axis direction), the above eight first ejector-pin-portion groups each having the first ejector-pin portions S1 are arranged at intervals. The first ejector-pin portions S1 in the first group S1.1 are positioned aligned with the first ejector-pin portions S1 in the eighth group S1.8 in the length direction of the lower plastic member 10 (X-axis direction), respectively. The first ejector-pin portion S1 in the second group S1.2 is positioned aligned with the first ejector-pin portion S1 in the seventh group S1.7 in the length direction of the lower plastic member 10 (X-axis direction). The first ejector-pin portions S1 in the third group S1.3 are positioned aligned with the first ejector-pin portions S1 in the sixth group S1.6 in the length direction of the lower plastic member 10 (X-axis direction), respectively. The first ejector-pin portions S1 in the fourth group S1.4 are positioned aligned with the first ejector-pin portions S1 in the fifth group S1.5 in the length direction of the lower plastic member 10 (X-axis direction), respectively. The first ejector-pin portions S1 in each group are symmetrical about the central axis A. The multiple first ejector-pin portions S1 are evenly distributed. Therefore, when the ejector pins are in contact with the positions of the multiple first ejector-pin portions S1 on the first surface 111, the ejector pins can apply a uniform ejecting force onto the first surface 111 of the lower plastic member 10, thereby improving the uniformity of the demolding of the lower plastic member 10 and further improving the yield of the lower plastic member 10. In other embodiments, the multiple groups of first ejector-pin portions S1 may not be positioned aligned with each other in the length direction of the lower plastic member 10 (X-axis direction).

During the ejection operation of the lower plastic member 10 by using the ejector pins, the multiple ejector pins are simultaneously in contact with the positions of the multiple first ejector-pin portions S1 on the first surface 111 of the lower-plastic-member body 11 and move synchronously, so that the first surface 111 is simultaneously subjected to the ejecting force from the ejector pins. The force is relatively uniform, so that the deformation of the lower plastic member 10 caused by uneven ejecting forces can be avoided, thereby facilitating improvement of the uniformity of the demolding of the lower plastic member 10, and further improving the injection molding yield of the lower plastic member 10.

Reference can be made to FIG. 9, which is a partial cross-sectional structural view of the lower plastic member illustrated in FIG. 6. The first ejector-pin portion S1 has a crater-like shape, with a recessed central region relative to the first surface 111 and an edge protruding from the first surface 111. The first ejector-pin portion S1 has an abutment surface S11. The abutment surface S11 is a surface formed by the middle part of the first ejector-pin portion S1 being recessed away from the first surface 111. In the thickness direction of the lower plastic member 10 (Z-axis direction), the abutment surface S11 is positioned facing toward the first surface 111. The shape of the abutment surface S11 is circular. Specifically, during injection molding and demolding, before the plastic cools to room temperature, when the ejector pin is in contact with the first surface 111 and applies an ejecting force, the pressure of the ejector pin acts on the first surface 111 to depress the plastic to define a recess, while part of the plastic surrounding the ejector pin is squeezed by the recessed plastic to rise around the periphery of the ejector pin. In this way, the first ejector-pin portion S1 with a carter-like shape is formed. It can be understood that when the ejector pin is in contact with the first surface 111 and applies an ejecting force, the ejector pin is in contact with the abutment surface S11. The second ejector-pin portion S2 and the third ejector-pin portion S3 have shapes similar to the shape of the first ejector-pin portion S1, also crater-like. The second ejector-pin portion S2 and the third ejector-pin portion S3 also have circular abutment surfaces, which will not be repeated hereinafter.

In the embodiments of the present disclosure, the crater-like shape of the first ejector-pin portion S1 is slightly recessed relative to the first surface 111. The recessed depth is negligible compared with the thickness of the lower-plastic-member body 11 (the dimension of the lower-plastic-member body 11 in the Z-axis direction), and no specific limitation is imposed on the recessed depth. The edge of the crater-like shape is also slightly raised relative to the first surface 111, and the raised height is negligible compared with the thickness of the lower-plastic-member body 11, with no specific limitation imposed on the raised height. In this way, the arrangement of the first ejector-pin portion S1 has no adverse effect on the structural strength of the lower-plastic-member body 11 and does not affect the function of the lower plastic member 10.

Reference can continue to be made to FIG. 8A and FIG. 8B. In this embodiment, the multiple second ejector-pin portions S2 are positioned on the first bottom-wall 171 of the first groove 17 and the second bottom-wall 181 of the second groove 18.

The multiple second ejector-pin portions S2 are divided into multiple groups, which can be referred to as second ejector-pin-portion groups. Each second ejector-pin-portion group has two second ejector-pin portions S2, and the two second ejector-pin portions S2 are positioned aligned with each other in the width direction of the lower plastic member 10 (Y-axis direction) and are pairwise symmetrical to each other about the central axis A. The second ejector-pin portion S2 has a circular abutment surface. The radius of the abutment surface of the second ejector-pin portion S2 is smaller than the radius of the abutment surface of the first ejector-pin portion S1. In this embodiment, the radius of the second ejector-pin portion S2 ranges from 1.5 mm to 3.0 mm.

Each first flow-guiding groove 175 has one second ejector-pin portion S2. In the width direction of the lower plastic member 10 (Y-axis direction), the second ejector-pin portions S2 in the two outermost first flow-guiding grooves 175 are respectively adjacent to the two end walls of the first groove 17. The second ejector-pin portions S2 in the two middle first flow-guiding grooves 175 are respectively positioned at opposite sides of the central axis A and are adjacent to each other. The second ejector-pin portions S2 in the four first flow-guiding grooves 175 are all adjacent to the sidewall of the first groove 17 and are arranged at intervals in the length direction of the first groove 17. Specifically, in this embodiment, the second ejector-pin portion S2 in each first flow-guiding groove 175 is adjacent to the first sidewall 172. The second ejector-pin portion S2 in each first flow-guiding groove 175 is positioned at the corner position. Each second flow-guiding groove 185 has one second ejector-pin portion S2. In the width direction of the lower plastic member 10, the second ejector-pin portions S2 in the two outermost second flow-guiding grooves 185 are respectively adjacent to the two end walls of the second groove 18. The second ejector-pin portions S2 in the two middle second flow-guiding grooves 185 are respectively positioned at opposite sides of the central axis A and are adjacent to each other. The second ejector-pin portions S2 in the four second flow-guiding grooves 185 are all adjacent to the sidewall of the second groove 18 and are arranged at intervals in the length direction of the second groove 18. Specifically, in this embodiment, the second ejector-pin portion S2 in each second flow-guiding groove 185 is adjacent to the third sidewall 182. The second ejector-pin portion S2 in each second flow-guiding groove 185 is positioned at the corner position.

In this embodiment, the mold for injection-molding the first protrusion 15 and the second protrusion 16 is a metal protruding block, and a driving structure is provided inside the metal protruding block to push the ejector pins outward. Therefore, the metal protruding block needs to occupy a certain space. By making the area of the abutment surface of each second ejector-pin portion S2 smaller than the area of the abutment surface S11 of each first ejector-pin portion S1, and by making the second ejector-pin portion S2 in the first flow-guiding groove 175 positioned at the corner position of the first flow-guiding groove 175 and the second ejector-pin portion S2 in the second flow-guiding groove 185 positioned at the corner position of the second flow-guiding groove 185, space can be provided for the driving structure of the second ejector-pin. In addition, the mold assembly for injection-molding the lower plastic member 10 can be designed smaller, thereby allowing a greater number of lower plastic members 10 to be formed in a single injection molding operation.

Specifically, in this embodiment, the multiple second ejector-pin portions S2 are divided into four second ejector-pin-portion groups. In the width direction of the lower plastic member 10 (Y-axis direction), each second ejector-pin portions S2 in the first group S2.1 is positioned in the first flow-guiding groove 175 on the outer side of the lower plastic member 10 and at the connection between the end wall of the first groove 17 and the first sidewall 172 of the first groove 17, that is, the second ejector-pin portions S2 in the first group S2.1 are adjacent to the end wall of the first groove 17. In the length direction (Y-axis direction) of the lower plastic member 10, the second ejector-pin portions S2 in the first group S2.1 are adjacent to the first sidewall 172. In the width direction of the lower plastic member 10 (Y-axis direction), the second ejector-pin portions S2 in the second group S2.2 are positioned in the first flow-guiding grooves 175 in the middle of the lower plastic member 10 and are adjacent to the central axis A. In the length direction (Y-axis direction) of the lower plastic member 10, the second ejector-pin portions S2 in the second group S2.2 are adjacent to the first sidewall 172. In the width direction of the lower plastic member 10 (Y-axis direction), each second ejector-pin portion S2 in the third group S2.3 is positioned in the second flow-guiding groove 185 on the outer side of the lower plastic member 10 and at the connection between the end wall of the second groove 18 and the third sidewall 182 of the second groove 18. In the width direction of the lower plastic member 10 (Y-axis direction), the second ejector-pin portions S2 in the fourth group S2.4 are positioned in the second flow-guiding grooves 185 in the middle of the lower plastic member 10 and are adjacent to the central axis A. In the length direction (Y-axis direction) of the lower plastic member 10, the second ejector-pin portions S2 in the fourth group S2.4 are adjacent to the third sidewall 182.

In this embodiment, the second ejector-pin portions S2 in the first group S2.1 are positioned aligned with the second ejector-pin portions S2 in the third group S2.3 in the length direction of the lower plastic member 10 (X-axis direction), respectively. The second ejector-pin portions S2 in the second group S2.2 are positioned aligned with the second ejector-pin portions S2 in the fourth group S2.4 in the length direction of the lower plastic member 10 (X-axis direction), respectively. The second ejector-pin portions S2 in each group are pairwise symmetrical about the central axis A. The multiple second ejector-pin portions S2 are evenly distributed. Therefore, when the ejector pins are in contact with the positions of the multiple second ejector-pin portions S2 on the first bottom-wall 171 and the second bottom-wall 181, the ejector pins can apply a uniform ejecting force onto the first bottom-wall 171 and the second bottom-wall 181 of the lower plastic member 10, thereby improving the uniformity of demolding of the first protrusion 15 and the second protrusion 16 of the lower plastic member 10 and further improving the yield of the lower plastic member 10. In other embodiments, the multiple groups of second ejector-pin portions S2 may not be positioned aligned with each other in the length direction of the lower plastic member 10 (X-axis direction).

The second ejector-pin portion S2 in each first flow-guiding groove 175 is positioned at the corner position of the first flow-guiding groove 175. A distance between the second ejector-pin portion S2 and any one of groove walls of the first flow-guiding groove 175 is greater than or equal to 0.55 mm. The second ejector-pin portion S2 in each second flow-guiding groove 185 is positioned at the corner position of the second flow-guiding groove 185. A distance between the second ejector-pin portion S2 and any one of sidewalls of the second flow-guiding groove 185 is greater than or equal to 0.55 mm. Therefore, when the ejector pins are used for demolding, the ejector pins are prevented from being positioned too close to the groove walls of the first flow-guiding groove 175 and the second flow-guiding groove 185, thereby avoiding interference between the ejector pins and the flow channels formed by the groove walls.

When the lower plastic member 10 is demolded by using the ejector pins, the ejector pins simultaneously abut against the positions of the multiple first ejector-pin portions S1 on the first surface 111 of the lower plastic member 10 and the positions of the multiple second ejector-pin portions S2 on the first bottom-wall 171 and the second bottom-wall 181. Therefore, the lower-plastic-member body 11, the first protrusion 15, and the second protrusion 16 can be simultaneously demolded, thereby improving the uniformity of demolding the lower plastic member 10, and further enhancing the demolding yield of the lower plastic member 10. The radius of the abutment surface S11 of the first ejector-pin portion S1 is larger than the radius of the abutment surface of the second ejector-pin portion S2, and an area of the end of the ejector pin in contact with the first surface 111 of the lower-plastic-member body 11 is relatively large, so that the contact area between the ejector pin and the first surface 111 is increased, thereby improving the demolding uniformity.

As illustrated in FIG. 8A and FIG. 8B, in this embodiment, multiple third ejector-pin portions S3 are positioned on the explosion-proof grid 14 and at the intersections of the first ribs 141 and the second ribs 142.

The multiple third ejector-pin portions S3 are divided into multiple groups, which can be referred to as third ejector-pin-portion groups. Each third ejector-pin-portion group has two third ejector-pin portions S3, and the two third ejector-pin portions S3 are positioned aligned with each other in the width direction of the lower plastic member 10 (Y-axis direction) and are pairwise symmetrical about the central axis A. The third ejector-pin portion S3 has a circular abutment surface. The radius of the abutment surface of the third ejector-pin portion S3 is smaller than the radius of the abutment surface S11 of the first ejector-pin portion S1.

Specifically, in this embodiment, the multiple third ejector-pin portions S3 are divided into three third ejector-pin-portion groups. Each third ejector-pin portion S3 in the first group S3.1 is positioned at the intersection of the second sub-rib 1412 and the second rib 142. Each third ejector-pin portion S3 in the second group S3.2 is positioned in the second sub-groove 122 and on the first sub-rib 1411. Each third ejector-pin portion S3 in the third group S3.3 is positioned at the intersection of the third sub-rib 1413 and the second rib 142. In the width direction of the lower plastic member 10 (Y-axis direction), the three third ejector-pin portions S3 at one side of the central axis A form a triangle, and the three third ejector-pin portions S3 can play a role in uniformly demolding the explosion-proof grid 14.

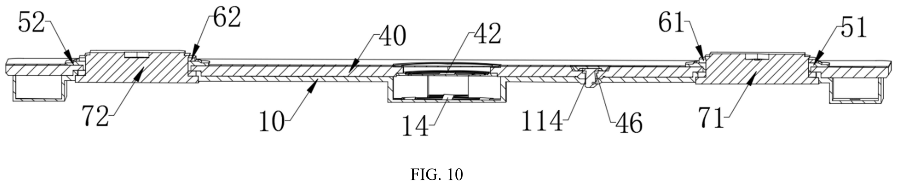

Reference can be made to FIG. 5, FIG. 6, and FIG. 10 in combination, where FIG. 10 is a schematic structural view of assembly of the end cover illustrated in FIG. 4 and a lower plastic member. The lower-plastic-member body 10 is stacked on the end cover 40. The first surface 111 of the lower plastic member 10 is positioned facing toward and attached to the rear surface 412 of the end cover 40. In the thickness direction of the end cover 40 (Z-axis direction), the first terminal-post through-hole 113 of the lower plastic member 10 and the first through-hole 44 of the end cover 40 are coaxially arranged and communicate with each other. The liquid injection through-hole 114 of the lower plastic member 10 and the electrolyte injection hole 46 of the end cover 40 are coaxially arranged and communicate with each other. The explosion-proof grid 14 of the lower plastic member 10 is positioned at a position corresponding to the explosion-proof valve 42 of the end cover 40. In the thickness direction of the end-cover assembly 100 (Z-axis direction), an orthographic projection of the explosion-proof valve 42 falls within an orthographic projection of the first sub-groove 121. In the thickness direction of the lower plastic member 10 (Z-axis direction), the cross-sectional area of the first sub-groove 121 is larger than the cross-sectional area of each of the two second sub-grooves 122, which helps the gas generated in the electrode assembly 200 to flow to the explosion-proof valve 42, so that the explosion-proof valve 42 can be opened. By defining the two second sub-grooves 122 at both sides of the first sub-groove 121 respectively, the area of the through groove 12 can be increased, thereby enlarging the flow area for the pressure gas toward the explosion-proof valve 42. During the transportation of the energy storage apparatus 1000, the tabs or blue films are prone to rupture and generate fragments. The explosion-proof grid 14 can prevent the explosion-proof failure caused by the fragments of the tabs or blue films floating to a position below the explosion-proof valve 42 and blocking the gas passage, and can also prevent a short circuit caused by the direct contact between the tabs and the explosion-proof valve 42.

The side edge of the insulating film is bonded to the end-cover assembly 100. Specifically, the side edge of the insulating film is thermally fused and bonded to the opposite sides of the protruding block 13 of the lower plastic member 10 in the width direction of the lower plastic member 10 (Y-axis direction). The arrangement of the protruding block 13 facilitates the fixed connection between the insulating film and the lower plastic member 10, thereby ensuring the insulation between the electrode assembly 200 and the end cover 40. Under the influence of the gravity of the electrode assembly 200 itself, the insulating film pulls the protruding block 13 of the lower plastic member 10 toward the electrode assembly 200, so that the central part of the lower plastic member 10 is bent and deformed. As a result, gas passages are defined between the two second sub-grooves 122 of the lower plastic member 10 and the end cover 40, so that the gas reaching the second sub-grooves 122 from the electrode assembly 200 can pass through the gas passages to reach the explosion-proof valve 42 of the end cover 40, thereby helping the gas in the electrode assembly 200 to reach the explosion-proof valve 42.

The embodiments of the present disclosure are described in detail above. Specific examples are used in this specification to describe the principle and implementations of the present disclosure. The description of the embodiments is only used to help understand the method and core ideas of the present disclosure. Meanwhile, those of ordinary skill in the art may make modifications to the specific implementations and application scopes according to the idea of the present disclosure. In conclusion, the content of the specification shall not be construed as a limitation to the present disclosure.

## Claims

1. A lower plastic member for an energy storage apparatus, wherein the lower plastic member comprises a lower-plastic-member body, the lower-plastic-member body has a first surface and a second surface, and the first surface and the second surface are positioned facing away from each other in a thickness direction of the lower plastic member;
the lower-plastic-member body is provided with a protruding block, a first protrusion, and a second protrusion, the protruding block, the first protrusion, and the second protrusion all protrude from the second surface, the first protrusion and the second protrusion are respectively positioned at opposite ends of the lower-plastic-member body in a length direction of the lower plastic member, both the first protrusion and the second protrusion extend in a width direction of the lower plastic member, the protruding block is positioned between the first protrusion and the second protrusion and is spaced apart from each of the first protrusion and the second protrusion, and the protruding block extends in the width direction of the lower plastic member; and
the protruding block has a first side-surface, the first protrusion has a third side-surface, the second protrusion has a fifth side-surface, the first side-surface, the third side-surface, and the fifth side-surface are positioned at a same side of the lower plastic member in the width direction of the lower plastic member, and an injection-molded portion is provided on each of the first side-surface, the third side-surface, and the fifth side-surface.

2. The lower plastic member of claim 1, wherein the lower plastic member defines a through groove, and the through groove has a groove sidewall protruding from the second surface; and
the lower plastic member is further provided with an explosion-proof grid, the explosion-proof grid is disposed in the through groove and is connected to one end of the groove sidewall positioned facing away from the first surface, the explosion-proof grid comprises several first ribs and several second ribs, the several first ribs extend in the width direction of the lower plastic member and are connected to the groove sidewall of the through groove, the several second ribs extend in the length direction of the lower plastic member and are connected to the groove sidewall of the through groove, and the several first ribs and the several second ribs are connected in a crisscross pattern.

3. The lower plastic member of claim 2, wherein a plurality of first ejector-pin portions are provided on the first surface, the plurality of first ejector-pin portions are symmetrical about a central axis, and the central axis is a straight line extending in the length direction of the lower plastic member and positioned in a middle of the lower plastic member in the width direction of the lower plastic member.

4. The lower plastic member of claim 3, wherein in the width direction of the lower plastic member, the plurality of first ejector-pin portions are positioned at opposite sides of the central axis, and the plurality of first ejector-pin portions are pairwise symmetrical about the central axis.

5. The lower plastic member of claim 3, wherein at least one of the plurality of first ejector-pin portions is positioned on the central axis, and each of the at least one of the plurality of first ejector-pin portions on the central axis is symmetrical about the central axis.

6. The lower plastic member of claim 3, wherein the lower plastic member defines a first groove, the first groove is recessed from the first surface toward the first protrusion, the first groove has a first bottom-wall, a first sidewall, and a second sidewall, and the first sidewall and the second sidewall are positioned facing toward each other in the length direction of the lower plastic member;
the lower plastic member defines a second groove, the second groove is recessed from the first surface toward the second protrusion, the second groove has a second bottom-wall, a third sidewall, and a fourth sidewall, and the third sidewall and the fourth sidewall are positioned facing toward each other in the length direction of the lower plastic member; and
a plurality of second ejector-pin portions are provided on the first bottom-wall and the second bottom-wall, and the plurality of second ejector-pin portions are pairwise symmetrical about the central axis.

7. The lower plastic member of claim 6, wherein the first groove is partitioned into several first flow-guiding grooves, the several first flow-guiding grooves are sequentially arranged in the width direction of the lower plastic member, the several first flow-guiding grooves have equal volumes, a length dimension of each of the plurality of first flow-guiding grooves ranges from 12.00 mm to 16.00 mm in the width direction of the lower plastic member, and a width dimension of each of the plurality of first flow-guiding grooves ranges from 7.00 mm to 11.00 mm in the length direction of the lower plastic member; and
the second groove is partitioned into several second flow-guiding grooves, the several second flow-guiding grooves are sequentially arranged in the width direction of the lower plastic member, the several second flow-guiding grooves have equal volumes, a length dimension of each of the plurality of second flow-guiding grooves ranges from 12.00 mm to 14.00 mm in the width direction of the lower plastic member, and a width dimension of each of the plurality of second flow-guiding grooves ranges from 7.00 mm to 11.00 mm in the length direction of the lower plastic member.

8. The lower plastic member of claim 6, wherein each of the plurality of first ejector-pin portions has a circular abutment surface, each of the plurality of second ejector-pin portions has a circular abutment surface, and a radius of the abutment surface of each of the plurality of first ejector-pin portions is larger than a radius of the abutment surface of each of the plurality of second ejector-pin portions.

9. The lower plastic member of claim 8, wherein the radius of the abutment surface of each of the plurality of second ejector-pin portions ranges from 1.5 mm to 3.0 mm.

10. The lower plastic member of claim 7, wherein the first groove has two end walls that are positioned facing toward each other in the width direction of the lower plastic member, the several first flow-guiding grooves are implemented as four first flow-guiding grooves, and one of the plurality of second ejector-pin portions is positioned in each of the four first flow-guiding grooves; in the width direction of the lower plastic member, second ejector-pin portions in outermost two of the four first flow-guiding grooves are respectively adjacent to the two end walls of the first groove, and second ejector-pin portions in middle two of the four first flow-guiding grooves are respectively positioned at opposite sides of the central axis and are adjacent to each other; and second ejector-pin portions in the four first flow-guiding grooves are all adjacent to a sidewall of the first groove and are arranged at intervals in a length direction of the first groove.

11. The lower plastic member of claim 10, wherein a distance between a second ejector-pin portion in each of the four first flow-guiding grooves and any one of groove walls of the corresponding first flow-guiding groove is greater than or equal to 0.55 mm.

12. The lower plastic member of claim 7, wherein the second groove has two end walls that are positioned facing toward each other in the width direction of the lower plastic member, the several second flow-guiding grooves are implemented as four second flow-guiding grooves, and one of the plurality of second ejector-pin portions is positioned in each of the four second flow-guiding grooves; in the width direction of the lower plastic member, second ejector-pin portions in outermost two of the four second flow-guiding grooves are respectively adjacent to the two end walls of the second groove, and second ejector-pin portions in middle two of the four second flow-guiding grooves are respectively positioned at opposite sides of the central axis and are adjacent to each other; and second ejector-pin portions in the four second flow-guiding grooves are all adjacent to a sidewall of the second groove and are arranged at intervals in a length direction of the second groove.

13. The lower plastic member of claim 12, wherein a distance between a second ejector-pin portion in each of the four second flow-guiding grooves and any one of groove walls of the corresponding second flow-guiding groove is greater than or equal to 0.55 mm.

14. The lower plastic member of claim 3, wherein a plurality of third ejector-pin portions are provided at intersections of the several first ribs and the several second ribs, and the plurality of third ejector-pin portions are pairwise symmetrical about the central axis.

15. The lower plastic member of claim 14, wherein each of the plurality of third ejector-pin portions has a circular abutment surface, and a radius of the abutment surface of each of the plurality of first ejector-pin portions is larger than a radius of the abutment surface of each of the plurality of third ejector-pin portions.

16. The lower plastic member of claim 2, wherein the through groove comprises a first sub-groove and two second sub-grooves, and in the width direction of the lower plastic member, the two second sub-grooves are respectively positioned at opposite sides of the first sub-groove, and each of the two second sub-grooves is in communication with the first sub-groove; and
in the length direction of the lower plastic member, a width dimension of the first sub-groove is larger than a width dimension of each of the two second sub-grooves.

17. An end-cover assembly, comprising an end cover and the lower plastic member of any one of claims 1 to 16, wherein the end cover is provided with an explosion-proof valve;
the lower plastic member defines a through groove, the through groove comprises a first sub-groove and two second sub-grooves, and in the width direction of the lower plastic member, the two second sub-grooves are respectively positioned at opposite sides of the first sub-groove, and each of the two second sub-grooves is in communication with the first sub-groove; and
the lower plastic member is mounted on a surface of the end cover, the first surface of the lower plastic member is positioned facing toward the end cover, and in the thickness direction of the end-cover assembly, an orthographic projection of the explosion-proof valve falls within an orthographic projection of the first sub-groove.

18. An energy storage apparatus, comprising a housing, an electrode assembly, and the end-cover assembly of claim 17, wherein the housing has an opening, the housing defines an accommodating cavity therein, the electrode assembly is accommodated in the accommodating cavity, and the end-cover assembly covers the opening.

19. An electricity-consumption device, comprising the energy storage apparatus of claim 18, wherein the energy storage apparatus is configured to store electrical energy.
